# Europäisches Patentamt
# European Patent Office
# Office européen des brevets

(19)

(11) Veröffentlichungsnummer: **0 321 802 B1**

(12) # EUROPÄISCHE PATENTSCHRIFT

(45) Veröffentlichungstag der Patentschrift: **02.09.92**

(51) Int. Cl.⁵: **F24D  3/16**

(21) Anmeldenummer: **88120610.6**

(22) Anmeldetag: **09.12.88**

(54) **Anordnung zum Halten eines Wärmeträgers unter einer Raumdecke.**

(30) Priorität: **19.12.87 DE 3743208**
**27.04.88 DE 3814227**

(43) Veröffentlichungstag der Anmeldung:
**28.06.89 Patentblatt  89/26**

(45) Bekanntmachung des Hinweises auf die
Patenterteilung:
**02.09.92 Patentblatt  92/36**

(84) Benannte Vertragsstaaten:
**AT BE CH DE FR GB IT LI LU**

(56) Entgegenhaltungen:
**DE-A- 1 604 066**
**DE-A- 2 551 089**
**DE-U- 8 101 301**
**DE-U- 8 703 788**
**FR-A- 2 225 265**

(73) Patentinhaber: **Feist, Artus**
**Lochermühle 1**
**W-5060 Bergisch Gladbach 2(DE)**

(72) Erfinder: **Feist, Artus**
**Lochermühle 1**
**W-5060 Bergisch Gladbach 2(DE)**

(74) Vertreter: **Berkenfeld, Helmut, Dipl.-Ing.**
**An der Schanz 2**
**W-5000 Köln 60(DE)**

EP 0 321 802 B1

## Beschreibung

Die Erfindung betrifft eine Anordnung zum Halten eines Wärmeträgers, insbesondere von ein Kühlmittel führenden flexiblen Rohren, unter einer Raumdecke mit unter dieser befestigten Abstandsleisten, mit auf diese aufgesetzten aus einem Flachmaterial bestehenden Schienen mit Taschen zum Einlegen und Halten des Wärmeträgers, der in hin- und hergehenden, einen gegenseitigen Abstand aufweisenden und durch Bögen verbundenen Strängen verlegt ist und einen Vorlauf und einen Rücklauf aufweist.

Bekannt ist eine Anordnung zum Halten von Kühlmittel-Rohren unter einer Raumdecke (DE-GBM 8 703 788), bei der eine Hartschaum-Platte unter der Raumdecke befestigt wird. Auf der Unterseite dieser Hartschaum-Platte sind in parallelen Reihen zylinderförmige Abstandhalter angeordnet. In diesen sind Aussparungen vorgesehen. Die Kühlmittel-Rohre werden hin- und hergehend zwischen den Abstandhaltern verlegt und in deren Aussparungen hineingedrückt. In einem Abstand unter der Hartschaum-Platte und damit den Kühlmittel-Rohren ist ein Abdeckelement angeordnet. Dieses Abdeckelement hemmt die Aufwärtsströmung der warmen Luft und verhindert deren unmittelbares Auftreffen auf die Kühlmittel-Rohre. Gleichzeitig verhindert es, daß die von den Kühlmittel-Rohren ausgehende kalte Luft nach unten fällt. Zwischen den Kühlmittel-Rohren und dem Abdeckelement befindet sich damit ein Gebiet beruhigter Luft. Damit verhindert das Abdeckelement starke Luftströmungen. Infolge des längeren Zusammenbleibens der warmen und der kalten Luft in dem Gebiet zwischen den Kühlmittel-Rohren und dem Abdeckelement verbessert sich auch der Wärme- bzw. Kälteübergang. Letzten Endes ist dieser Kälteübergang aber auf die Oberfläche der Kühlmittel-Rohre begrenzt. Mit einem Teil ihrer Oberfläche liegen diese noch an der Hartschaum-Platte und an den Abstandhaltern an. Das heißt, daß die Oberfläche, über die die Kühlmittel-Rohre Kälte abgeben oder Wärme aus der Raumluft aufnehmen können, bei der bekannten Anordnung verhältnismäßig gering ist. Dies beschränkt die Kühlleistung der gesamten Anordnung. Ein engeres Verlegen der Kühlmittel-Rohre auf der Hartschaum-Platte, um damit auf gleicher Fläche eine größere Länge Rohr unterzubringen, steigert die Leistung nur gering. Wie ausgeführt, liegen die Rohre mit einem wesentlichen Teil ihrer Oberfläche an der Hartschaum-Platte an. Auch dem Senken der Temperatur des Kühlmittels durch steigern der Leistung der Kältemaschine sind Grenzen gesetzt. Bei einer zu niedrigen Temperatur des Kühlmittels wird der Taupunkt an der Oberfläche der Rohre schnell erreicht. Der in der Luft enthaltene Wasserdampf kondensiert. An den Kühlmittel-Rohren bilden sich Tropfen. Diese fallen ab. Im Laufe der Zeit zerstören sie die Abdeckplatte.

Bekannt ist eine verbesserte Anordnung zum Halten eines Wärmeträgers der eingangs genannten Gattung (DE-A-1 604 066), bei der durch die auf die Abstandsleisten aufgesetzten Schienen ein freier Raum zwischen der Oberseite der Schienen und der Unterseite der Raumdecke geschaffen wird. Bekannt ist weiter eine Fußbodenheizung (DE-A-2 551 089), bei der die Bögen zwischen den Enden der Stränge im gleichen Drehsinn verlaufen und die zurücklaufenden Bögen sich kreuzen. Diese Verlegeart läßt einen verhältnismäßig geringen Abstand zwischen den einzelnen Strängen zu.

Von diesem Stand der Technik ausgehend liegt der Erfindung die Aufgabe zugrunde, eine Anordnung zum Halten eines Wärmeträgers, insbesondere von ein Kühlmittel führenden flexiblen Rohren, so auszubilden, daß auf einer vorgegebenen Fläche ein Maximum an Rohrlänge untergebracht wird. Hierbei ist zu beachten, daß die Wärmeträger oder Rohre eine bestimmte Festigkeit oder eine nur begrenzte Biegsamkeit aufweisen. Dies bedeutet, daß die Bögen zwischen den einzelnen Strängen einen bestimmten Mindesthalbmesser aufweisen müssen. Die begrenzte Biegsamkeit läßt nicht zu, daß die Bögen zum Erreichen eines geringen Abstandes zwischen den einzelnen Strängen über einen bestimmten Mindesthalbmesser hinaus gebogen werden können. Die Lösung für die genannte Aufgabe ergibt sich gemäß der Erfindung bei einer Anordnung der eingangs genannten Gattung in überraschend einfacher Weise dadurch, daß die Bögen zwischen den Enden der Stränge im gleichen Drehsinn verlaufen und vor- und zurücklaufende Bögen sich kreuzen, daß der sich an den Vorlauf anschließende Strang zu diesem einen Abstand von mehreren Taschen einer Schiene und der sich an diesen anschließende nächste Strang zu dem Vorlauf einen Abstand von weniger Taschen einer Schiene aufweist und daß am Anfang und Ende einer Anordnung Taschen freibleiben. Da die Bögen zwischen den Enden der Stränge im gleichen Drehsinn verlaufen und vor- und zurücklaufende Bögen sich kreuzen, können die Stränge in jede Tasche der Schienen und damit mit geringem gegenseitigen Abstand eingelegt werden. Ein Strang wird zum Beispiel in die sechste Tasche, der nächstfolgende Strang in die dritte Tasche, der nächstfolgende Strang in die achte Tasche, der nächstfolgende Strang in die fünfte Tasche usw. eingelegt. Obwohl die aufeinanderfolgenden Stränge damit um jeweils mehrere Taschen auseinanderliegen und die sie verbindenden Bögen einen verhältnismäßig großen Halbmesser erhalten, ist jede Tasche mit einem Strang besetzt. Damit läßt sich auf wenig Raum viel Rohr unterbringen. Damit ergibt sich auf engem Raum eine große Übergangsfläche zwischen dem Wärmeträger, zum Beispiel einem Kühlmittel, und Luft.

An denjenigen Stellen, an denen sich die Bögen kreuzen, nehmen sie eine Höhe vom doppelten Rohrdurchmesser ein. Dabei liegt der der Raumdecke zugewandte Bogen vorzugsweise in der Ebene der Abstandsleisten.

Bei einer vorteilhaften Ausführungsform weist der sich an den Vorlauf anschließende Strang zu diesem einen Abstand von fünf Taschen einer Schiene und der sich an diesen anschließende nächste Strang zu dem Vorlauf einen Abstand von zwei Taschen einer Schiene auf.

Die Stränge selbst können parallel zueinander verlaufen. Ebenso kann jeder zweite Strang schräg verlaufen. Schließlich können die Stränge unterschiedlichen Abstand voneinander aufweisen.

In einer weiteren zweckmäßigen Ausgestaltung ist vorgesehen, daß Schienen in zwei Ebenen unter der Raumdecke befestigt sind. Mit dieser Maßnahme läßt sich noch mehr Rohr auf kleinem Raum unterbringen. Zweckmäßig sind die in verschiedenen Ebenen liegenden Schienen um die Länge einer Tasche längsversetzt zueinander angeordnet. Damit wird vermieden, daß die Rohre einer Ebene im Lee der Rohre der anderen Ebene liegen. Die Rohre der beiden Ebenen können in gleicher Weise von Luft umströmt werden. Zweckmäßig liegen Abstandsleisten zwischen den einzelnen Schienen.

In einer besonders vorteilhaften Ausgestaltung ist vorgesehen, daß flexible und poröse Matten aus einem Material mit hoher Wärmeleitfähigkeit zwischen der Raumdecke und den Rohren eingelegt sind. Diese Matten liegen teilweise unmittelbar an den Rohren an. Zwischen den Rohren und den Matten erfolgt damit ein Wärmeübergang durch Leitung. Auf ihrer gesamten Oberfläche werden die Matten weiter von Luft umströmt. Damit erhöhen die Matten den Wärme- bzw. Kälteübergang zwischen den Rohren und der Luft.

Zum Erreichen einer besonders hohen Berührungsfläche zwischen den Matten und den Rohren sollten die Matten ein solches Volumen aufweisen, daß sie mit etwas Kraft in den Raum zwischen der Unterseite der Raumdecke und die Rohre hineingestopft werden müssen. Dann liegen sie mit großer Oberfläche an den Rohren an.

Am Beispiel der in der Zeichnung gezeigten Ausführungsform wird die Erfindung nun weiter beschrieben. Die Ausführungsform bezieht sich auf die Anordnung von ein Kühlmittel führenden Rohren. In der Zeichnung ist:

Fig. 1    ein Längsschnitt durch einen Raum, unter dessen Decke eine erfindungsgemäße Anordnung angebracht ist,

Fig. 2    ein Schnitt durch eine Raumdecke mit einer unter dieser befestigten erfindungsgemäßen Anordnung entlang der Schnittlinie II - II in Fig. 1,

Fig. 3    eine Ansicht von unten gegend ie Raumdecke in Blickrichtung des Pfeiles III in Fig. 2,

Fig. 4    ein Längsschnitt durch ein Stück Raumdecke mit in zwei Ebenen unter dieser angebrachten Rohren,

Fig. 5    ein Schnitt entlang der Schnittlinie V - V in Fig. 4 und

Fig. 6    ein Schnitt ähnlich Fig. 5 mit zwischen den Rohren angeordneten Matten.

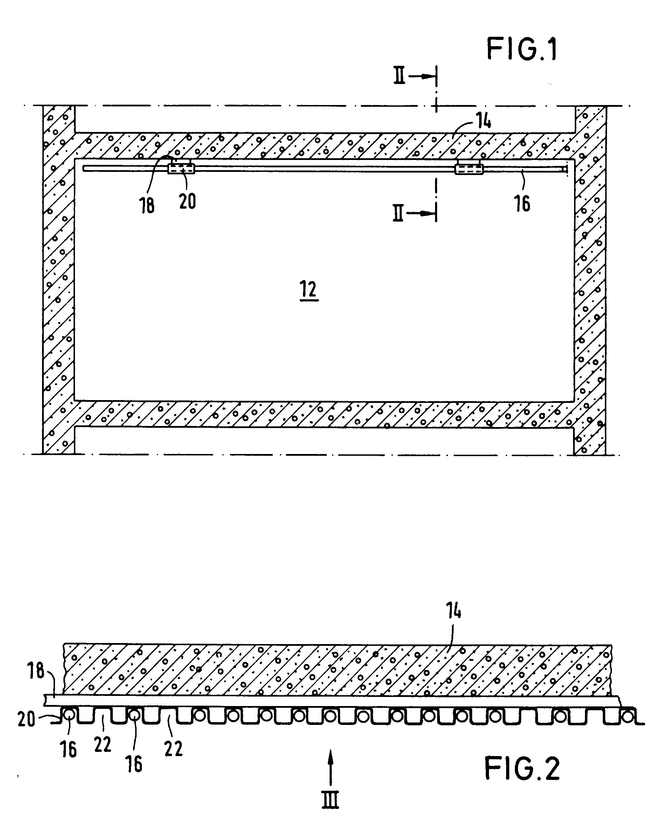

Fig. 1 zeigt schematisch einen Raum mit einem Boden, zwei Wänden und einer Decke 14. In einem Abstand unter der Unterseite der Decke 14 verlaufen die das Kühlmittel führenden Rohre 16. Unmittelbar an der Decke 14 sind die Abstandsleisten 18 befestigt. Sie sind zum Beispiel mit der Decke verdübelt. Die Schienen 20 sind an den Abstandsleisten 18 befestigt. Die Schienen 20 weisen, wie zum Beispiel Fig. 2 zeigt, Taschen 22 auf. In diesen werden die Rohre 16 gehalten. Auf den Innenseiten der Taschen 22 sind warzenförmige Vorsprünge vorgesehen. Sie verhindern, daß diese herabrutschen.

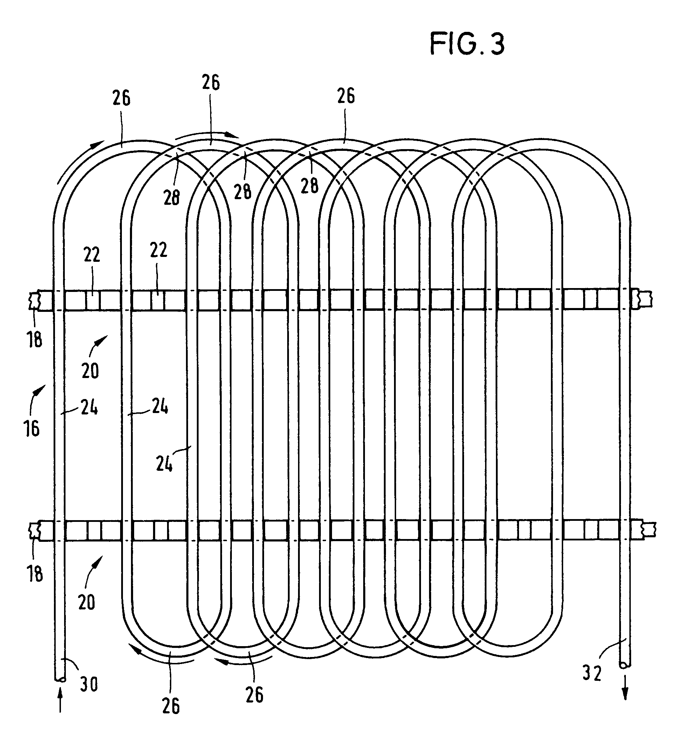

Fig. 3 zeigt die besonders vorteilhafte Verlegeform für die das Kühlmittel führenden Rohre 16. Diese liegen mit geraden und zueinander parallelen Strängen 24 in den Taschen 22. Bögen 26 verbinden die Enden der Stränge 24. Die entlang der Bögen 26 eingezeichneten Pfeile zeigen den gleichen Drehsinn sämtlicher Bögen. Die Bögen kreuzen sich an den Stellen 28. Im mittleren Bereich der beiden Schienen 20 liegt in jeder Tasche ein Rohr 16. Benachbarte Stränge 24 liegen damit nur um den Abstand von einer Tasche 22 auseinander. Der engste Halbmesser, den ein Bogen 26 beschreibt, entspricht dagegen dem Abstand zwischen drei Taschen. Das heißt, daß die Rohre 16 trotz engen Abstandes zwischen den einzelnen Strängen 24 nur entlang eines verhältnismäßig großen Halbmessers gebogen werden. Fig. 3 zeigt weiter noch einen Vorlauf 30 und einen Rücklauf 32. Diese führen das Kühlmittel zu bzw. ab.

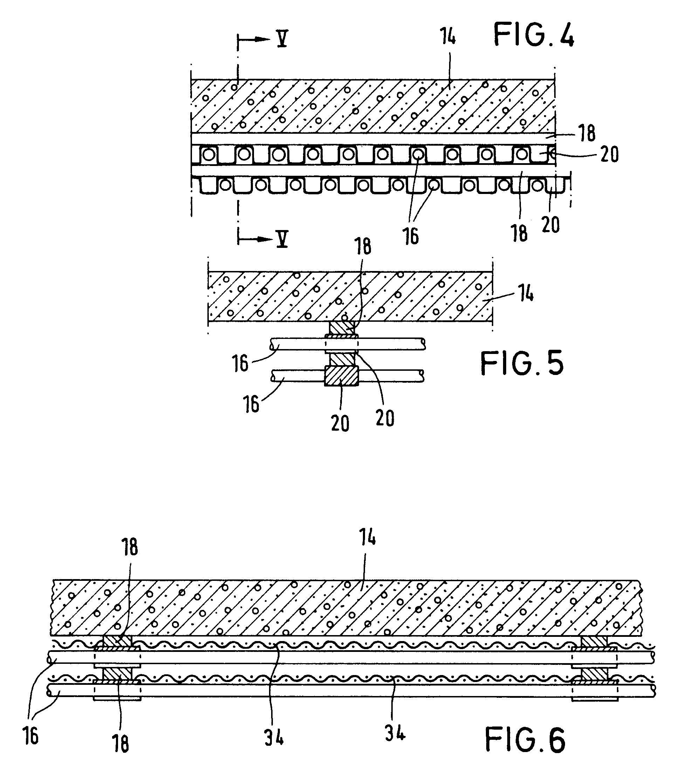

Die Figuren 4 bis 6 zeigen, daß Abstandsleisten 18, Schienen 20 und Rohre 16 in zwei Ebenen übereinander unter der Raumdecke 14 angebracht sind. Gemäß der Darstellung in Fig. 4 sind die Schienen 20 dabei um die Länge einer Tasche 22 längsversetzt zueinander. Dies erleichtert das Umströmen der Rohre 16 durch die Luft. Wie Fig. 5 zeigt, sind die Abstandsleisten 18 und die Schienen 20 unmittelbar untereinander angeordnet und miteinander verbunden. Bei der Ausführungsform nach Fig. 6 liegen poröse und biegsame Matten 34 aus einem Material mit hoher Wärmeleitfähigkeit auf und über den beiden Rohrlagen. In der Wirklichkeit kann der Raum zwischen den beiden Rohrlagen und über der oberen Rohrlage stärker mit den Matten ausgefüllt sein, als es Fig. 5 zeigt. Die Matten 34 vergrößern die Oberfläche, über der die Wärme von der Luft auf das Kühlmittel übergeht.

Nicht dargestellt ist die Ausführungsform, bei der jeder zweite Strang schräg verläuft.

**Patentansprüche**

1. Anordnung zum Halten eines Wärmeträgers, insbesondere von ein Kühlmittel führenden flexiblen Rohren (16), unter einer Raumdecke (14) mit unter dieser befestigten Abstandsleisten (18), mit auf diese aufgesetzten aus einem Flachmaterial bestehenden Schienen mit Taschen (22) zum Einlegen und Halten des Wärmeträgers (16), der in hin- und hergehenden, einen gegenseitigen Abstand aufweisenden und durch Bögen (26) verbundenen Strängen (24) verlegt ist und einen Vorlauf (30) und einen Rücklauf (32) aufweist, dadurch gekennzeichnet, daß die Bögen (26) zwischen den Enden der Stränge (24) im gleichen Drehsinn verlaufen und vor- und zurücklaufende Bögen (26) sich kreuzen, daß der sich an den Vorlauf (30) anschließende Strang (24) zu diesem einen Abstand von mehreren Taschen (22) einer Schiene (20) und der sich an diesen anschließende nächste Strang (24) zu dem Vorlauf (30) einen Abstand von weniger Taschen (22) einer Schiene (20) aufweist und daß am Anfang und Ende einer Anordnung Taschen (22) freibleiben.

2. Anordnung nach Anspruch 1, dadurch gekennzeichnet, daß bei sich kreuzenden Bögen (26) der der Raumdecke (14) zugewandte Bogen in der Ebene der Abstandsleisten (18) liegt.

3. Anordnung nach Anspruch 1, dadurch gekennzeichnet, daß der sich an den Vorlauf (30) anschließende Strang (24) zu diesem einen Abstand von fünf Taschen (22) einer Schiene (20) und der sich an diesen anschließende nächste Strang (24) zu dem Vorlauf (30) einen Abstand von zwei Taschen (22) einer Schiene (20) aufweist.

4. Anordnung nach einem der Ansprüche 1 bis 3, dadurch gekennzeichnet, daß die Stränge (24) parallel zueinander verlaufen.

5. Anordnung nach einem der Ansprüche 1 bis 4, dadurch gekennzeichnet, daß jeder zweite Strang (24) schräg verläuft.

6. Anordnung nach einem der Ansprüche 1 bis 5, dadurch gekennzeichnet, daß die Stränge (24) unterschiedlichen Abstand voneinander aufweisen.

7. Anordnung nach einem der Ansprüche 1 bis 6, dadurch gekennzeichnet, daß Schienen (20) in zwei Ebenen unter der Raumdecke (14) befestigt sind.

8. Anordnung nach Anspruch 7, dadurch gekennzeichnet, daß die Schienen (20) um die Länge einer Tasche (22) längsversetzt zueinander sind.

9. Anordnung nach einem der Ansprüche 7 oder 8, dadurch gekennzeichnet, daß eine Abstandsleiste (18) zwischen je zwei Schienen (20) angeordnet ist.

10. Anordnung nach einem der Ansprüche 1 bis 9, dadurch gekennzeichnet, daß flexible und poröse Matten (34) aus einem Material mit hoher Wärmeleitfähigkeit zwischen der Raumdecke (14) und den Rohren (16) eingelegt sind.

11. Anordnung nach Anspruch 10, dadurch gekennzeichnet, daß die Matten (34) ein solches Volumen aufweisen, daß sie die Rohre (16) mindestens teilweise berühren.

**Claims**

1. An arrangement for holding a heat carrier device, in particular flexible pipes (16) for carrying a coolant, under a ceiling (14), comprising spacer battens (18) which are fixed beneath the ceiling, bars which are fitted on to the spacer battens and comprise a flat material, with pockets (22) for insertion and holding of the heat carrier device (16) which is laid in runs (24) which extend to and fro and which are at a spacing from each other and which are connected by bends (26), the heat carrier device having a feed (30) and a return (32), characterised in that the bends (26) between the ends of the runs (24) extend in the same rotational direction and forwardly and rearwardly extending bends (26) cross each other, that the run (24) which joins the feed (30) is at a spacing relative thereto of a plurality of pockets (22) of a bar (20) and the next run (24) which joins said run is at a spacing relative to the feed (30) of fewer pockets (22) of a bar (20), and that pockets (22) remain free at the beginning and end of an arrangement.

2. An arrangement according to claim 1 characterised in that in the case of mutually crossing bends (26) the bend which is towards the ceiling (14) lies in the plane of the spacer battens (18).

3. An arrangement according to claim 1 characterised in that the run (24) which joins the feed (30) is at a spacing relative thereto of five pockets (22) of a bar (20) and the next run (24) which joins said run is at a spacing relative to the feed (30) of two pockets (22) of a bar (20).

4. An arrangement according to one of claims 1 to 3 characterised in that the runs (24) extend parallel to each other.

5. An arrangement according to one of claims 1 to 4 characterised in that each second run (24) extends inclinedly.

6. An arrangement according to one of claims 1 to 5 characterised in that the runs (24) are at different spacings from each other.

7. An arrangement according to one of claims 1 to 6 characterised in that bars (20) are fixed in two planes under the ceiling (14).

8. An arrangement according to claim 7 characterised in that the bars (20) are displaced longitudinally relative to each other by the length of a pocket (22).

9. An arrangement according to one of claims 7 and 8 characterised in that a spacer batten (18) is arranged between each two bars (20).

10. An arrangement according to one of claims 1 to 9 characterised in that flexible and porous mats (34) of a material with a high degree of thermal conductivity are inserted between the ceiling (14) and the pipes (16).

11. An arrangement according to claim 10 characterised in that the mats (34) are of such a volume that they at least partially touch the pipes (16).

**Revendications**

1. Montage pour le maintien de moyens de transfert de chaleur, en particulier de tubes flexibles (16) parcourus par un fluide réfrigérant, en dessous du plafond (14) d'un local, comportant des lattes d'espacement (18) fixées sous ce plafond, des bandes en une matière plate présentant des créneaux (22) pour la mise en place et le maintien des moyens de transfert de chaleur (16) qui sont posés en des longueurs (24) s'étendant dans un sens et dans l'autre, séparées par une distance réciproque et raccordées par des coudes (26), et qui comprennent un aller (30) et un retour (32), caractérisé en ce que les coudes (26) s'étendent entre les extrémités des longueurs (24) dans le même sens de rotation et des coudes d'aller et de retour (26) se croisent, que la longueur (24) qui se raccorde à l'aller (30) présente, à l'égard de cet aller, une distance de plusieurs créneaux (22) d'une bande (20) et la longueur (24) suivante qui se raccorde à la précédente présente, à l'égard de l'aller (30), une distance d'un plus petit nombre de créneaux (22) d'une bande (20) et qu'au début et à la fin d'un montage, des créneaux (22) restent libres.

2. Montage suivant la revendication 1, caractérisé en ce que, dans le cas de coudes (26) qui se croisent, le coude tourné vers le plafond (14) du local se trouve dans le plan des lattes d'espacement (18).

3. Montage suivant la revendication 1, caractérisé en ce que la longueur (24) qui se raccorde à l'aller (30) présente, à l'égard de celui-ci, une distance de cinq créneaux (22) d'une bande (20) et la longueur (24) suivante qui se raccorde à la précédente présente, à l'égard de l'aller (30), une distance de deux créneaux (22) d'une bande (20).

4. Montage suivant l'une quelconque des revendications 1 à 3, caractérisé en ce que les longueurs (24) s'étendent parallèlement l'une à l'autre.

5. Montage suivant l'une quelconque des revendications 1 à 4, caractérisé en ce que chaque seconde longueur (24) s'étend obliquement.

6. Montage suivant l'une quelconque des revendications 1 à 5, caractérisé en ce que les longueurs (24) présentent des distances réciproques différentes.

7. Montage suivant l'une quelconque des revendications 1 à 6, caractérisé en ce que des bandes (20) sont fixées dans deux plans en dessous du plafond (14) du local.

8. Montage suivant la revendication 7, caractérisé en ce que les bandes (20) sont décalées longitudinalement l'une par rapport à l'autre de la longueur d'un créneau (22).

9. Montage suivant la revendication 7 ou 8, caractérisé en ce qu'une latte d'espacement (18) est installée entre chaque fois deux bandes (20).

10. Montage suivant l'une quelconque des revendications 1 à 9, caractérisé en ce que des mats flexibles et poreux (34) en une matière à haute conductibilité thermique sont installés entre le plafond (14) du local et les tubes (16).

11. Montage suivant la revendication 10, caractérisé en ce que les mats (34) ont un volume tel qu'ils sont au moins partiellement en contact avec les tubes (16).

FIG.1

II →

14

18  20

II →

16

12

14

18

20

16  22  16  22

III

FIG.2

# FIG. 3

FIG.4

FIG.5

FIG.6